# EUROPEAN PATENT SPECIFICATION

(11) **EP 4 234 956 B1**
(45) Date of publication and mention of the grant of the patent: **11.09.2024**
(21) Application number: 22159136.5
(22) Date of filing: 28.02.2022
(51) Int. Cl.: F16B 13/06, F16B 13/14

(54) **EXPANSION ANCHOR SYSTEM AND METHOD WITH MORTAR AND INORGANIC FILLER**
SPREIZDÜBELSYSTEM UND VERFAHREN MIT MÖRTEL UND ANORGANISCHEM FÜLLSTOFF
SYSTÈME ET PROCÉDÉ D'ANCRAGE D'EXPANSION AVEC MORTIER ET REMPLISSAGE INORGANIQUE

(43) Date of publication of application: 30.08.2023
(73) Proprietor: Hilti Aktiengesellschaft, 9494 Schaan (LI)
(72) Inventor: Spampatti, Matteo, 9470 Buchs (CH); Behrens, Nicole, 81245 München (DE); Strohriegl, Kristina, 86836 Klosterlechfeld (DE); Plenk, Christian, 86916 Kaufering (DE); Shimahara, Hideki, 9472 Grabs (CH)
(74) Representative: Hilti Aktiengesellschaft Corporate Intellectual Property

(56) References cited:
- EP-A1- 3 159 554
- WO-A1-2021/185965
- DE-A1- 10 216 897
- DE-A1- 10 360 156

## Description

The invention relates to an expansion anchor which is installed with mortar. The expansion anchor is equipped with a bolt having a neck region and an expansion region adjoining the neck region.

Expansion anchors are known for example from DE 101 08 844 A1. They are used in a drilled hole in a substrate, for example, in a wall or ceiling of a component. By retraction of the expansion area of the bolt, the expansion sleeve is radially expanded, and the expansion anchor is anchored into the underlying material. Typically, the bolt of such an expansion anchor has a substantially circular cross-section.

The strength and performance of expansion anchors can be increased by a mortar. Mortars are adhesive pastes or liquids which are cured or hardened and bind the expansion anchor to the substrate. DE 10 2006 000 475 A1 and DE 103 60 156 A1 relate to the installation of expansion anchors in combination with a mortar. The mortar can be added into the borehole after the expansion anchor. Typically, such expansion anchors comprise means, such as grooves or slits, which support the passage of the mortar towards the end of the borehole.

Such systems with expansion anchors in combination with mortar could still be improved. It is a general problem that the forces required for installing such anchors is often too high. Typically, the borehole diameter is relatively large, such that the anchor and mortar can be conveniently installed. However, the strength and performance of the system can be reduced if the borehole is relatively wide. It can be another problem that the expansion anchor cannot spread adequately if surrounded by mortar. If the expansion anchor is installed before the mortar, it can be difficult to distribute the mortar uniformly. In some systems, the amount of mortar used is relatively low, such that only relatively small regions of the expansion anchor can be attached to the borehole wall. Overall, there is a need for improved systems, in which the strength and performance is improved.

It is a problem underlying the invention to provide methods and expansion anchors which overcome the problems outlined above. The problem of the inventions is especially to provide anchor systems and methods, which can be applied conveniently, uniformly and efficiently, with relatively low forces. It is a specific problem to provide an expansion anchor having high strength and performance.

The problem is solved by methods and mounting systems according to the claims. Further embodiments are outlined in the description.

Subject of the invention is a method for installing an expansion anchor (1) in a borehole,
wherein the expansion anchor (1) comprises
   a bolt (2) with an expansion region (3) at the frontal end (4) and a neck region (5), wherein the expansion region (3) adjoins the neck region (5) and tapers to the neck region (5),
   an expansion sleeve (6) at least partially surrounding the neck region (6), and
   a thread (7) for a nut (8) at the rear end (9),
the method comprising the steps of
   a) filling into the borehole a mortar, which comprises an organic polymer adhesive and inorganic filler,
   b) inserting the expansion anchor (1) into the borehole with the frontal end (4) first,
   c) applying a torque to withdraw the expansion anchor (1) a short distance out of the borehole, such that the expansion sleeve (6) is radially expanded, and
   d) hardening and/or curing the mortar to obtain the installed expansion anchor (1),
wherein the mortar comprises ≤ 72.5 wt.% inorganic filler, based on the total weight of the mortar.

When the mortar comprises ≤ 72.5 wt.% organic filler, the residual amount of 27.5 wt.% are the total of other components, typically the organic polymer adhesive and additives. As used herein, all amounts in percent relate to weight percent of the mortar as inserted into the borehole, i.e. before curing.

The mortar is an adhesive which attaches the anchor to the borehole. The mortar is a chemical mortar which is cured by chemical reaction. Upon curing, the organic polymers are crosslinked and form a polymer matrix. The mortar comprises an inorganic filler which is dispersed in the polymer matrix after curing. The mortar is preferably a two-component adhesive, which is rapidly cured after combining the components and filling into the borehole. The mortar is generally adapted for rapid curing after filling into the borehole. Thus, the crosslinking proceeds already during the anchor installation process.

In the art, mortars typically comprise high amounts of inorganic filler. This is considered advantageous for providing a strong bond to the inorganic substrate, such as concrete or stone. Further, a high amount of inorganic filler can provide a cost advantage, because the organic polymer adhesive is generally more expensive.

According to the invention, it was found that the amount of inorganic filler in the mortar strongly affects the installation and performance of the expansion anchor system. Installing an expansion anchor into a borehole filled with mortar requires mechanical forces. Pressure must be applied for inserting the expansion anchor and pressing the mortar upwards. Further, a torque must be applied for withdrawing the expansion anchor a short distance out of the borehole.

According to the present invention, it was found that it is advantageous to reduce the amount of inorganic filler in the mortar. When the mortar comprises ≤ 72.5 wt.% inorganic filler, the workability can be significantly reduced. It becomes significantly easier to insert the expansion anchor into the borehole which already comprises the curing mortar. It also becomes significantly easier to apply torque on the expansion anchor, such that the expansion sleeve is radially expanded, and a strong mechanical bond is obtained. Overall, an optimal combination of mechanical bond through the expansion sleeve and chemical bond by the mortar can be achieved by reducing the amount of inorganic filler. The expansion anchor system can be installed more conveniently. Due to the high bonding strength, the total amount of mortar can be kept low, a relatively thin borehole and/or a relatively thin expansion anchor can be sufficient for the fixing application.

In a preferred embodiment, the mortar comprises ≤ 65 wt.% inorganic filler, based on the total weight of the mortar. In a more preferred embodiment, the mortar comprises ≤ 50 wt.% inorganic filler, based on the total weight of the mortar. It was found that the expansion system can be installed more conveniently when the amount of inorganic filler is reduced accordingly. Lower number of hammer blows and nut turns can be required for installing the anchor.

In a preferred embodiment, the mortar comprises ≤ 25 wt.%, preferably < wt.15% inorganic filler, based on the total weight of the mortar. When the ratio of inorganic filler is adjusted to such low levels, the expansion anchor can be installed even more conveniently. An optimal combination of the mechanical and chemical bonds can be achieved. An expansion anchor system is obtained for convenient and also uniform repetitive installation. This is advantageous for applications at constructions sites, where it is highly relevant that high numbers of anchor systems have uniform properties.

In a preferred embodiment, the mortar comprises ≥ wt.2%, preferably ≥ wt.5% inorganic filler, based on the total weight of the mortar. It can be advantageous to include a minimum amount of inorganic filler, such that high binding strength to inorganic substrates is obtained.

The mortar comprises an organic polymer adhesive. The polymer adhesive can be a conventional adhesive which is suitable for respective expansion anchor systems. Typically, the mortar does not comprise a solvent, such as water, and/or does not release water upon binding. The mortar may comprise additives, such as thickener, catalyst or diluents.

In a preferred embodiment, the organic polymer adhesive is an epoxy-amine, polyurethane and/or radically curable adhesive. It was found that the advantageous effect of the inorganic filler reduction is especially pronounced for these adhesives.

It is especially preferred that the organic polymer adhesive is an epoxy-amine adhesive. When the inorganic filler is reduced in epoxy-amine mortar, the improvements regarding installation and performance are especially pronounced. The preparation and use of epoxy-amine mortars is known in the art, for example from US20210198418A1, US2021332182A1, US2020362161A1 or US2015232719A1. Such epoxy-amine mortars can also be used in the present invention.

The epoxy resins are preferably glycidyl ethers which are derived from polyhydric alcohols, in particular from polyhydric phenols such as bisphenols and novolacs, in particular those having an average glycidyl group functionality of 1.5 or greater, in particular 2 or greater, for example from 2 to 10. The epoxy resins can have an epoxy equivalent weight of from 120 to 2000 g/EQ, preferably from 140 to 400, in particular from 155 to 195, for example from 165 to 185. Mixtures of a plurality of epoxy resins may also be used. The epoxy resin is preferably a diglycidyl ether of bisphenol A or bisphenol F or a mixture thereof.

Novolac resins are obtained by acidic condensation of unsubstituted phenol or substituted phenol derivatives with an aldehyde, especially formaldehyde, the aldehyde/phenol ratio being less than 1:1. According to another preferred embodiment of the curing composition, the polyphenol comprises a bisphenol selected from the group of bisphenol A and bisphenol F, either alone or together with the above-mentioned novolac resin.

In addition to the epoxy resins, the epoxy resin component (A) may optionally contain at least one reactive diluent. Glycidyl ethers of aliphatic, alicyclic or aromatic monoalcohols or in particular polyalcohols having a lower viscosity than epoxies containing aromatic groups are used as reactive diluents. Examples of reactive diluents are monoglycidyl ethers, e.g. o-cresyl glycidyl ether, and glycidyl ethers having an epoxy functionality of at least 2, such as 1,4-butanediol diglycidyl ether (BDDGE), cyclohexanedimethanol diglycidyl ether and hexanediol diglycidyl ether.

Furthermore, the epoxy resin component (A) can contain conventional additives, in particular adhesion promoters, filler, thixotropic agents such as optionally organically after-treated fumed silica, bentonites, alkyl- and methylcelluloses and castor oil derivatives, plasticizers such as phthalic or sebacic acid esters, stabilizers, antistatic agents, thickeners, flexibilizers, hardening catalysts, rheology aids, wetting agents, coloring additives such as dyes or pigments, for example for different staining of components for improved control of their mixing, as well as wetting agents, desensitizing agents, dispersants and other control agents for the reaction rate, or mixtures of two or more thereof.

The epoxy-amine mortar comprises an amine component. Preferably, the amine component comprises at least one first polyamine and at least one second polyamine. Preferably, it comprises an accelerator, which is preferably at least one polyphenol selected from the group consisting of bisphenols, novolac resins and Mannich bases.

According to a preferred embodiment, the first polyamine is selected from the group consisting of 1,2-diaminocyclohexane, 1,2-diaminocyclohexen, diethylenetriamine (DETA) and triethylenetetramine (TETA), and combinations thereof. The second polyamine is preferably selected from the group consisting of 1,3-bis(aminomethyl)cyclohexane and aminoethylpiperazine.

The amine component can also include Mannich bases, polyamidoamines or phenalkamines.

The amines suitable as further curing agents for the epoxy resin in multi-component mortar compounds are known to a person skilled in the art. In particular, the amines are selected from the group consisting of aliphatic, alicyclic, aromatic and araliphatic amines, the amine having on average at least two reactive hydrogen atoms, bonded to one nitrogen atom, per molecule. This also includes polyamines having at least two amino groups in the molecule. The amine component may comprise further additives, for example from the group of thinners, solvents, further accelerators, adhesion promoters and inorganic fillers. The curing composition is preferably free from solvents.

Preferably, the radically curing adhesive is based on vinyl esters and/or acrylates.

Preferably, the inorganic filler is cement, such as Portland cement or aluminate cement or another hydraulically setting inorganic substance, quartz, glass, corundum, porcelain, earthenware, baryte, light spar, gypsum, talc and/or chalk and mixtures thereof. The inorganic fillers can be added in particulate form, for example in the form of sands or flours. The fillers may be present in one or all components of the multi-component mortar. The inorganic filler is preferably selected from the group consisting of thickeners, such as fumed silica, quartz sand, quartz powder and cement, such as aluminate cement and/or Portland cement.

In a preferred embodiment, the bolt comprises a collar adjoining the rear end (upper end) of the neck. The collar has a higher diameter than the neck region. The collar concludes the neck region and can function as a barrier for the axial movement of the expansion sleeve.

Typically, the bolt comprises voids, through which the mortar can penetrate the borehole towards the upper region, when the anchor is inserted and exerts pressure on the mortar; such as slits or grooves, which can be arranged in parallel. Typically, the bolt is narrower than the borehole, such that the mortar can pass through the gap in between and/or the void space of a thread.

In a preferred embodiment, the method comprises a preceding step of drilling the borehole. In a preferred embodiment, the method comprises a final step of applying a fixture to the installed expansion anchor. For example, the fixture can be a structural element or a building component. The substrate, in which the borehole is drilled, can be a hard inorganic material, such as concrete or stone.

Subject of the invention is also a mounting system comprising a substrate having a borehole and an expansion anchor (1) installed in the borehole, wherein the expansion anchor (1) comprises
a bolt (2) with an expansion region (3) at the frontal end (4) and a neck region (5), wherein the expansion region (3) adjoins the neck region (5) and tapers to the neck region (5),
an expansion sleeve (6) at least partially surrounding the neck region (6), and
a thread (7) for a nut (8) at the rear end (9),
wherein the borehole comprises a cured mortar, which comprises an organic polymer adhesive and inorganic filler,
wherein the mortar comprises ≤ 72.5 wt.% inorganic filler, based on the total weight of the mortar.

In the mounting system, the filler ratio relates to the cured mortar, which is typically the same as for the uncured mortar.

Preferably, the mounting system with the installed expansion anchor is obtained by a method as outlined above. In a preferred embodiment, the mounting system comprises the installed expansion anchor and a fixture, which is fixed to the expansion anchor. Subject of the invention is also an installed expansion anchor which is obtained by a method as outlined above.

The above embodiments and aspects of the invention are outlined further in the following figure. The figure is schematic, and the dimensions could be, but are not necessarily, drawn to scale.

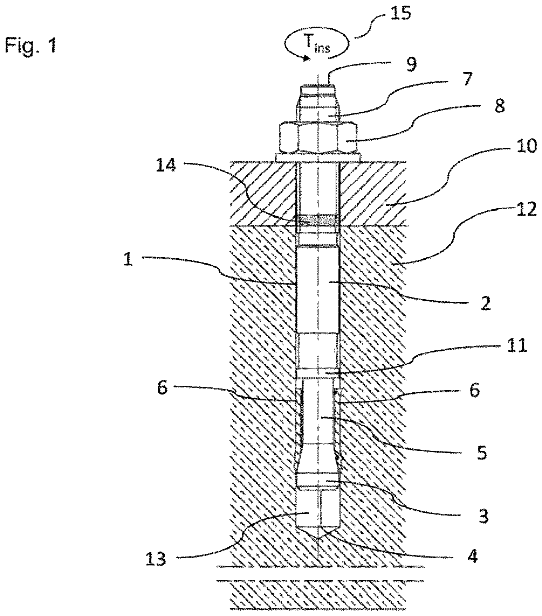

- Fig. 1: shows an embodiment of an expansion anchor and system of the invention.

### Detailed description of embodiments

Fig. 1 shows an embodiment of an expansion anchor 1 according to the invention. The expansion anchor 1 has a bolt 2 and an expansion sleeve 6 which surrounds the bolt 2. The bolt 2 has a neck region 5 having a substantially constant cross-section and connected to neck region in the front end 4 (lower end, towards the borehole bottom) of the bolt 2, an expansion region 3 for the expansion sleeve 6, in which the bolt 2 widens from the neck area 5 to its front end 4. On the side of the neck region 5 opposite the expansion region 3, the bolt 2 can have a collar 11 for the expansion sleeve 6 formed, for example, as an annular shoulder. At its rear end region 9 (upper end) opposite expansion region 3, the bolt 2 is provided with an external thread 7 for a nut 8. By means of the nut 8, a fixture 10 can be fixed to the substrate 12.

The borehole has been filled with mortar at the bottom. When installing the expansion anchor 1, the bolt 2 with expansion region 6 is advanced in the direction of the longitudinal axis of the bolt 2 into a drilled borehole in substrate 10. The expansion sleeve 6 is thereby also introduced into the hole, preferably due to collar 11. By tightening the nut 8, a torque can be applied in direction 15, and the bolt 2 is withdrawn a short distance from the borehole, such as between 1% to 10% of the length of the expansion anchor. Because of its friction with the drilled-hole wall, the expansion sleeve 6 stays back and displacement of the bolt 2 relative to the expansion sleeve 6 occurs, in which the expansion region 3 of bolt 2 penetrates into the expansion sleeve 6, so that it is radially expanded by the expansion region 3 and pressed towards the borehole wall. Through this mechanism, the expansion anchor 1 is fixed in the substrate 10. Further, the mortar has been pressed upwards in the borehole by the expansion anchor and its further movement. Subsequently, the filling height of the mortar can be at least up to the upper end of the neck region 5. If a collar 11 is comprised, the filling height can be at least up to the upper end of the collar 11. In a preferred embodiment, a setting depth mark 14, for example a color mark, marks a region which should not be filled with mortar.

### Examples

The effect of the amount of inorganic filler was investigated for various mortars. Boreholes were drilled into a substrate and chemical mortars were filled into the boreholes. The mortars were of different adhesive types and comprised different levels of inorganic filler. An expansion anchor (trademark HST3, Hilti, LI) was inserted into each borehole. The number of hammer blows for inserting the expansion anchor and the number of nut turns required for fixing the anchor by expanding the expansion sleeve were determined and are shown in table 1. For comparison, the same system was also examined without mortar (example 5). Examples 1 to 4 show the mortar systems and results for two epoxy amine and two polyurethane adhesives with different amounts of filler. The results demonstrate that installation is significantly more convenient and effective when the amount of filler is relatively low. Overall, if was found that the effects are especially pronounces for epoxy-amine-mortars.

**Table 1: Mortar systems and results**

| example | mortar type | amount filler [wt. %] | hammer blows | nut turns |
|---|---|---|---|---|
| 1 | epoxy amine | 12 | 21 | 2.0625 |
| 2 | epoxy amine | 4 | 26 | 1.9375 |
| 3 | polyurethane | 54 | 33,5 | 2.25 |
| 4 | polyurethane-acrylic | 65 | very difficult | n. d. |
| 5 comp. | none | - | 16.5 | 1.625 |

The epoxy amine mortar used in example 1 has the following composition:
A-component

| compound | function | wt.% | trademark | supplier | land |
|---|---|---|---|---|---|
| 3-glycidyloxypropyl-trimethosysilane | coupling agent | 3,4 | Dynasylan GLYMO | Evonik Industries | DE |
| bisphenol A-based epoxy resin | epoxy resin | 42,5 | DER 330 | Dow Europe | CH |
| bisphenol F-based epoxy resin | epoxy resin | 23,2 | DER 354 | Dow Europe | CH |
| 1,4-butanediol-diglycidyl ether | reactive diluent | 8,2 | Polypox R3 | Dow Europe | CH |
| trimethyolpropan-triglycidylether | reactive diluent | 8,2 | Araldite DY-T | Huntsman | BE |
| quartz | filler | 12,1 | Millisil W12 | Qua.zwerke Frechen | DE |
| silicic acid | thickener | 2,4 | Cab-O-Sil TS-720 | Cabot Rheinfelden | DE |

| | | | | | |
|---|---|---|---|---|---|
| EEW = 193 g/EQ | | | | | |

B-component

| compound | function | wt.% | trademark | supplier | land |
|---|---|---|---|---|---|
| m-xylylendiamine | amine hardener | 9,0 | mXDA | Itochu Deutschland | DE |
| 2-methyl-1,5-pentamethylendiamin | amine hardener | 49.5 | Dytek A | Invista | NL |
| novolac | accelerant | 21.0 | Phenolite TD-2131 | DIC Europe | DE |
| 2,4,6-tris(dimethylaminomethyl)phenol, bis[(dimethylamino)methyl]phenol | accelerant | 2.4 | Ancamine K54 | Air Products | NL |
| styrolyzed phenol | accelerant | 14.1 | Novares LS 500 | Rain Carbon Germany | DE |
| silicic acid | thickener | 4.0 | Cab-O-Sil TS-720 | Cabot Rheinfelden | DE |

| | | | | | |
|---|---|---|---|---|---|
| AHEW = 51 g/EQ | | | | | |

The epoxy amine mortar in example 2 had the following composition:
A-component

| compound | function | wt.% | trademark | supplier | land |
|---|---|---|---|---|---|
| 3-glycidyloxypropyl-trimethosysilane | coupling agent | 4.0 | Dynasylan GLYMO | Evonik Industries | DE |
| bisphenol A-based epoxy resin | epoxy resin | 48.4 | Araldite GY 240 | Huntsman | BE |
| bisphenol F-based epoxy resin | epoxy resin | 26.1 | Araldite GY 282 | Huntsman | BE |
| 1,4-butanediol-diglycidyl ether | reactive diluent | 9.3 | Araldite DY-206 | Huntsman | BE |
| trimethyolpropan-triglycidylether | reactive diluent | 9.3 | Araldite DY-T | Huntsman | BE |
| silicic acid | thickener | 2.9 | Cab-O-Sil TS-720 | Cabot Rheinfelden | DE |

| | | | | | |
|---|---|---|---|---|---|
| EEW = 165 g/EQ | | | | | |

B-component

| compound | function | wt.% | trademark | supplier | land |
|---|---|---|---|---|---|
| isophorondiamine | amine hardener | 40,8 | Vestamin IPD | Evonik Degussa | DE |
| 1,3-cyclohexandimethanamin | amine hardener | 40,9 | 1,3-BAC | Itochu Deutschland | DE |
| calciumnitrate-tetrahydrate (80% in glycerine) | accelerant | 4,0 | | | |
| 2,4,6-tris(dimethylaminomethyl)phenol, Bis[(dimethylamino)methyl]phenol | accelerant | 7,0 | Ancamine K54 | Evonik | DE |
| silicic acid | thickener | 7,3 | Aerosil R 805 | Evonik | DE |

| | | | | | |
|---|---|---|---|---|---|
| AHEW = 47 g/EQ | | | | | |

The polyurethane mortar in example 3 had a composition based on PCT/EP2021/056941, example 4, with minor modification and an inorganic filler amount of 54%.

The mortar in example 4 comprises a total of 64wt.% inorganic filler, with
Component A: polyurethane methacrylate resin, inorganic filler
Component B: dibenzoyl peroxide, phlegmatized

### List of reference signs

- 1: expansion anchor
- 2: bolt
- 3: expansion region
- 4: frontal end
- 5: neck region
- 6: expansion sleeve
- 7: thread
- 8: nut
- 9: rear end
- 10: fixture
- 11: collar
- 12: substrate
- 13: void
- 14: setting depth mark
- 15: direction of torque / nut turn

## Claims

1. A method for installing an expansion anchor (1) in a borehole,
wherein the expansion anchor (1) comprises
a bolt (2) with an expansion region (3) at the frontal end (4) and a neck region (5), wherein the expansion region (3) adjoins the neck region (5) and tapers to the neck region (5),
an expansion sleeve (6) at least partially surrounding the neck region (6), and
a thread (7) for a nut (8) at the rear end (9),
the method comprising the steps of
a) filling into the borehole a mortar, which comprises an organic polymer adhesive and inorganic filler,
b) inserting the expansion anchor (1) into the borehole with the frontal end (4) first,
c) applying a torque to withdraw the expansion anchor (1) a short distance out of the borehole, such that the expansion sleeve (6) is radially expanded, and
d) hardening and/or curing the mortar to obtain the installed expansion anchor (1),
wherein the mortar comprises ≤ 72.5 wt.% inorganic filler, based on the total weight of the mortar.

2. The method of claim 1, wherein the mortar comprises ≤ 65 wt.% inorganic filler, based on the total weight of the mortar.

3. The method of at least one of the preceding claims, wherein the mortar comprises ≤ 50 wt.% inorganic filler, based on the total weight of the mortar.

4. The method of at least one of the preceding claims, wherein the mortar comprises ≤ 20 wt.% inorganic filler, based on the total weight of the mortar.

5. The method of at least one of the preceding claims, wherein the mortar comprises ≥ 2 wt.%, preferably ≥ 5 wt.% inorganic filler, based on the total weight of the mortar.

6. The method of at least one of the preceding claims, wherein the organic polymer adhesive is an epoxy-amine or radically curable adhesive.

7. The method of at least one of the preceding claims, comprising a preceding step of drilling the borehole.

8. The method of at least one of the preceding claims, comprising a final step of applying a fixture to the installed expansion anchor (1).

9. A mounting system comprising a substrate having a borehole and an expansion anchor (1) installed in the borehole, wherein the expansion anchor (1) comprises
a bolt (2) with an expansion region (3) at the frontal end (4) and a neck region (5), wherein the expansion region (3) adjoins the neck region (5) and tapers to the neck region (5),
an expansion sleeve (6) at least partially surrounding the neck region (6), and
a thread (7) for a nut (8) at the rear end (9),
wherein the borehole comprises a cured mortar, which comprises an organic polymer adhesive and inorganic filler,
wherein the mortar comprises ≤72.5 % inorganic filler, based on the total weight of the mortar.

10. The mounting system of claim 9, comprising a fixture (10) which is fixed to the expansion anchor (1).

## Patentansprüche

1. Verfahren zum Einbauen eines Spreizankers (1) in ein Bohrloch,
wobei der Spreizanker (1) umfasst
einen Bolzen (2) mit einem Spreizbereich (3) an dem vorderen Ende (4) und einem Halsbereich (5), wobei der Spreizbereich (3) an den Halsbereich (5) angrenzt und sich zu dem Halsbereich (5) hin verjüngt,
eine Spreizhülse (6), die den Halsbereich (6) mindestens teilweise umgibt, und
ein Gewinde (7) für eine Mutter (8) an dem hinteren Ende (9),
das Verfahren umfassend die Schritte
a) Füllen eines Mörtels in das Bohrloch, der einen organischen Polymerklebstoff und anorganischen Füllstoff umfasst,
b) Einsetzen des Spreizankers (1) in das Bohrloch mit dem vorderen Ende (4) zuerst,
c) Anwenden eines Drehmoments, um den Spreizanker (1) ein kurzes Stück aus dem Bohrloch herauszuziehen, derart, dass die Spreizhülse (6) radial aufgeweitet wird, und
d) Härten und/oder Aushärten des Mörtels, um den eingebauten Spreizanker (1) zu erhalten,
wobei der Mörtel zu ≤ 72,5 Gew.-% anorganischen Füllstoff, basierend auf dem Gesamtgewicht des Mörtels, umfasst.

2. Verfahren nach Anspruch 1, wobei der Mörtel zu ≤ 65 Gew.-% anorganischen Füllstoff, basierend auf dem Gesamtgewicht des Mörtels, umfasst.

3. Verfahren nach mindestens einem der vorstehenden Ansprüche, wobei der Mörtel zu ≤ 50 Gew.-% anorganischen Füllstoff, basierend auf dem Gesamtgewicht des Mörtels, umfasst.

4. Verfahren nach mindestens einem der vorstehenden Ansprüche, wobei der Mörtel zu ≤ 20 Gew.-% anorganischen Füllstoff, basierend auf dem Gesamtgewicht des Mörtels, umfasst.

5. Verfahren nach mindestens einem der vorstehenden Ansprüche, wobei der Mörtel zu ≥ 2 Gew.-%, vorzugsweise zu ≥ 5 Gew.-% anorganischen Füllstoff, basierend auf dem Gesamtgewicht des Mörtels, umfasst.

6. Verfahren nach mindestens einem der vorstehenden Ansprüche, wobei der organische Polymerklebstoff ein Epoxid-Amin- oder radikalisch härtbarer Klebstoff ist.

7. Verfahren nach mindestens einem der vorstehenden Ansprüche, umfassend einen vorstehenden Schritt des Bohrens des Bohrlochs.

8. Verfahren nach mindestens einem der vorstehenden Ansprüche, umfassend einen abschließenden Schritt des Anbringens einer Befestigung an den eingebauten Spreizanker (1).

9. Montagesystem, umfassend ein Substrat, das ein Bohrloch und einen Spreizanker (1), der in dem Bohrloch eingebaut ist, umfasst, wobei der Spreizanker (1) umfasst
einen Bolzen (2) mit einem Spreizbereich (3) an dem vorderen Ende (4) und einem Halsbereich (5), wobei der Spreizbereich (3) an den Halsbereich (5) angrenzt und sich zu dem Halsbereich (5) hin verjüngt,
eine Spreizhülse (6), die den Halsbereich (6) mindestens teilweise umgibt, und
ein Gewinde (7) für eine Mutter (8) an dem hinteren Ende (9),
wobei das Bohrloch einen ausgehärteten Mörtel umfasst, der einen organischen Polymerklebstoff und anorganischen Füllstoff umfasst,
wobei der Mörtel zu ≤ 72,5 % anorganischen Füllstoff, basierend auf dem Gesamtgewicht des Mörtels, umfasst.

10. Montagesystem nach Anspruch 9, umfassend eine Befestigung (10), die an dem Spreizanker (1) befestigt ist.

## Revendications

1. Procédé d'installation d'une coquille d'expansion (1) dans un trou de forage,
dans lequel la coquille d'expansion (1) comprend
un boulon (2) avec une région d'expansion (3) au niveau de l'extrémité frontale (4) et une région de col (5), dans lequel la région d'expansion (3) est adjacente à la région de col (5) et se rétrécit jusqu'à la région de col (5),
un manchon d'expansion (6) entourant au moins partiellement la région de col (6), et
un filetage (7) pour un écrou (8) au niveau de l'extrémité arrière (9),
le procédé comprenant les étapes consistant à
a) remplir le trou de forage d'un mortier, qui comprend un adhésif polymère organique et une charge inorganique,
b) insérer la coquille d'expansion (1) dans le trou de forage en commençant par l'extrémité frontale (4),
c) appliquer un couple pour retirer la coquille d'expansion (1) sur une courte distance hors du trou de forage, de telle sorte que le manchon d'expansion (6) est expansé radialement, et
d) provoquer le durcissement et/ou la cure du mortier pour obtenir la coquille d'expansion (1) installée,
dans lequel le mortier comprend ≤ 72,5 % en poids de charge inorganique, sur la base du poids total du mortier.

2. Procédé selon la revendication 1, dans lequel le mortier comprend ≤ 65 % en poids de charge inorganique, sur la base du poids total du mortier.

3. Procédé selon au moins l'une des revendications précédentes, dans lequel le mortier comprend ≤ 50 % en poids de charge inorganique, sur la base du poids total du mortier.

4. Procédé selon au moins l'une des revendications précédentes, dans lequel le mortier comprend ≤ 20 % en poids de charge inorganique, sur la base du poids total du mortier.

5. Procédé selon au moins l'une des revendications précédentes, dans lequel le mortier comprend ≥ 2 % en poids, de préférence ≥ 5 % en poids de charge inorganique, sur la base du poids total du mortier.

6. Procédé selon au moins l'une des revendications précédentes, dans lequel l'adhésif polymère organique est un adhésif époxy-amine ou un adhésif à durcissement par voie radicalaire.

7. Procédé selon au moins l'une des revendications précédentes, comprenant une étape précédente de forage du trou de forage.

8. Procédé selon au moins l'une des revendications précédentes, comprenant une étape finale d'application d'une fixation à la coquille d'expansion (1) installée.

9. Système de montage comprenant un substrat ayant un trou de forage et une coquille d'expansion (1) installée dans le trou de forage, dans lequel la coquille d'expansion (1) comprend
un boulon (2) avec une région d'expansion (3) au niveau de l'extrémité frontale (4) et une région de col (5), dans lequel la région d'expansion (3) est adjacente à la région de col (5) et se rétrécit jusqu'à la région de col (5),
un manchon d'expansion (6) entourant au moins partiellement la région de col (6), et
un filetage (7) pour un écrou (8) au niveau de l'extrémité arrière (9),
dans lequel le trou de forage comprend un mortier durci, qui comprend un adhésif polymère organique et une charge inorganique,
dans lequel le mortier comprend ≤ 72,5 % de charge inorganique, sur la base du poids total du mortier.

10. Système de montage selon la revendication 9, comprenant une fixation (10) qui est fixée à la coquille d'expansion (1).
